(19) Europäisches Patentamt
European Patent Office
Office européen des brevets

(11) Veröffentlichungsnummer: **0 003 830**
**A1**

(12) # EUROPÄISCHE PATENTANMELDUNG

(21) Anmeldenummer: 79100507.7

(22) Anmeldetag: 21.02.79

(51) Int. Cl.$^2$: **B 23 K 9/08**

(30) Priorität: 25.02.78 DE 2808199

(43) Veröffentlichungstag der Anmeldung: 05.09.79 Patentblatt 79/18

(84) Benannte Vertragsstaaten: BE DE FR GB IT NL SE

(71) Anmelder: **Industrie-Werke Karlsruhe Augsburg Aktiengesellschaft**
**Gartenstrasse 71**
**D-7500 Karlsruhe 1(DE)**

(72) Erfinder: **Ganowski, Franz-Josef, Dipl.-Ing.**
**Haus Nr. 46**
**D-8901 Maingründel(DE)**

(72) Erfinder: **Pache, Norbert**
**Zusmarshauser Weg 7a**
**D-8900 Augsburg(DE)**

(74) Vertreter: **Zahn, Roland, Dipl.-Ing. et al,**
**Gartenstrasse 71**
**D-7500 Karlsruhe 1(DE)**

(54) **Verfahren zum Lichtbogenschweissen.**

(57) Bei einem Verfahren zum Schweißen metallischer Werkstucke mit längseiner Schweißkanten-Nahtbahn magnetisch bewegtem Lichtbogen werden Schweißstrom I und/oder Schweißspannung U durch Änderung des Abstands zwischen den Werkstücken 18, 19 nachgeregelt.

Mit diesem Verfahren wird der Anwendungsbereich des Schweißens mit magnetisch bewegtem Lichtbogen gesteigert.

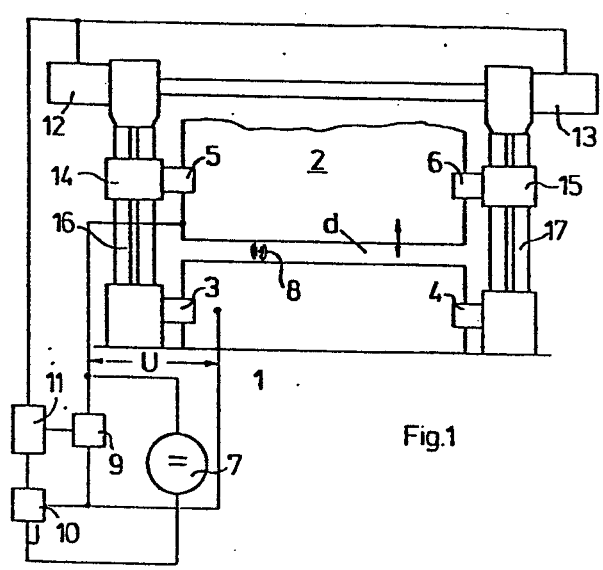


Fig.1



Croydon Printing Company Ltd.

0003830

Verfahren zum Lichtbogenschweißen

Die Erfindung betrifft ein Verfahren zum Schweißen zweier metallischer Werkstücke, mit längs einer Schweißkanten-Nahtbahn magnetisch bewegtem Lichtbogen.

Mit einem solchen, auch als Magnetpreßschweißen oder Magnetarc-Schweißen bezeichneten Verfahren, das bereits durch das deutsche Patent DBP 23 21 070 bekannt ist, soll eine auto-

matische Schweißung erreicht werden. Diese automatische Schweißung ist jedoch unbefriedigend insofern als der wandernde Lichtbogen bei ungleichmäßigem Abstand der Werkstücke bzw. der Nahtränder oder bei ungleichmäßigem Abbrand eine sehr ungleichmäßige Schweißnaht mit unregelmäßigem Einbrand zur Folge hat, was sich nachteilig für die Schweißgüte auswirkt. Es hat sich gezeigt, daß auch durch Nachregeln der Schweißstromquelle auf stets gleichen Schweißstrom oder/und -spannung kein über die ganze Nahtlänge gleichmäßiger Einbrand erreicht werden kann.

Der Erfindung liegt die Aufgabe zugrunde, Maßnahmen vorzusehen, durch die ein gleichmäßiger Einbrand längs der ganzen Naht und damit eine verbesserte Schweißgüte erreicht wird.

Gelöst wird diese Aufgabe gemäß der Erfindung dadurch, daß der Istwert von Schweißstrom oder/und -spannung oder einer aus diesen gebildeten Größe mit einem durch Versuchsschweißungen gewonnenen Sollwert verglichen und durch Ändern des vom Lichtbogen übersprungenen Abstands zwischen den Werkstücken während des Schweißvorganges auf den Sollwert nachgeregelt werden. Es wird also nicht die Schweißstromquelle entsprechend nachgestellt sondern der Abstand zwischen den Werkstücken wird geändert, bis die gemessenen bzw. aus den Messungen

errechneten Istwerte wieder den vorher aufgrund von Versuchen für optimale Schweißbedingungen festgelegten Sollwerten entsprechen.

Besonders vorteilhaft erweist es sich, wenn aus den laufend gemessenen Werten des Schweißstromes I und der Schweißspannung U als Istwert die Größe $\int_0^t I \cdot R^y \, dt$ von 0 bis t oder $I \cdot R^y \cdot t$ mittels an sich bekannten Rechenschaltungen gebildet wird, also durch Integration von Meßwerten über die Schweißzeit oder durch Multiplikation von Momentanmeßwerten unter ständigem Vergleich mit den vorher für optimale Schweißung ermittelten Sollwerten. Hierbei hat der Exponent y des Widerstandes R einen von 1 verschiedenen solchen Wert, daß der Einfluß des Widerstandes auf den angezeigten Istwert mindestens gleichwertig zum Einfluß des Stromes I und/oder der Schweißzeit t auf den angezeigten Istwert wird. Bei Wahl dieser bisher nur für Widerstandsscheißung bekannten Vergleichsgröße (DT-PS 23 15 184) ergibt sich überraschenderweise für die vorbeschriebene Lichtbogenschweißung eine besonders hohe und über die ganze Nahtlänge gleichbleibende Schweißgüte. Selbstverständlich kann im Rahmen der Erfindung die vorgenannte Vergleichsgröße auch in der allgemeinen Form $I^x . R^y . t^z$ verwendet werden.

Die Erfindung ist anhand der Zeichnung beispielsweise und schematisch dargestellt. Es zeigen:

Fig. 1: eine Schweißanordnung von zwei Werkstücken mit offener Nahtbahn und

Fig. 2: die Anordnung von zwei miteinander zu verschweißenden Rohren.

Die beiden miteinander zu verschweißenden Werkstücke 1 und 2 sind in einem für den Beginn der Schweißung festgelegten Abstand d einander gegenüber eingespannt, das untere 1 in ortsfesten Spanneinrichtungen 3 und 4, das obere 2 in vertikal auf und abbewegbaren Spanneinrichtungen 5 und 6. Die Werkstücke 1 und 2 sind an die Schweißstromquelle 7 angeschlossen. Durch Einschalten der Schweißspannung U springt der Lichtbogen 8 zwischen den Werkstücken 1 und 2 über. Er wird hierbei, wie in der Patentschrift DT-PS 23 21 070 beschrieben, durch eine hier nicht näher dargestellte Magnetanordnung längs der Nahtbahn geführt.

Während des Schweißvorganges wird durch eine Meßeinrichtung 9 die Schweißspannung U und durch eine weitere Meßeinrichtung der Schweißstrom I gemessen. Die gemessenen Werte werden einer Regeleinrichtung 11 zugeführt, durch die sie, insbesondere zur Ermittlung der vorstehend erwähnten Vergleichsgrößen verarbeitet und die dann ermittelten Istwerte mit den durch vorherige Versuchsschweißungen festgelegten Sollwerten, bei deren Einhaltung optimale Schweißgüte erreicht wird, verglichen. Bei Abweichung der Istwerte von den Sollwerten erscheint am Ausgang der Regeleinrichtung 11 eine entsprechende Steuerspannung, die die Motoren 12 und 13 der Spanneinrichtung steuert.

Die bereits erwähnten bewegbaren Spanneinrichtungen 5 und 6 sind jeweils an einem Schlitten 14 und 15 befestigt, die, angetrieben durch die Motoren 12 und 13, auf einer vertikalen Schlittenführung auf und ab bewegt werden können. Entsprechend der Größe und dem Vorzeichen der am Ausgang der Regeleinrichtung 11 vorhandenen Steuerspannung werden die Motoren 12 und 13 so angetrieben, daß das über die Spanneinrichtungen 5 und 6 an den Schlitten 14 und 15 befestigte Werkstück 2 seinen Abstand gegenüber dem Werkstück 1 derart ändert, daß die Steuerspannung am Reglerausgang Null wird. Dann ist der Sollabstand zwischen den Werkstücken erreicht, bei dem die für optimale Schweißung erforderlichen Werte von I, U oder $\int_0^t I.R^y\,dt$ von 0 bis t vorliegen. Das Werkstück 2 erfährt also bei dem erfindungsgemäßen Verfahren während des Schweißvorganges eine Bewegung gemäß Pfeilrichtung. Durch entsprechende Programmierung der Regeleinrichtung 11 kann durch sie auch das am Ende der Schweißung durchzuführende Zusammenpressen der Werkstücke gesteuert werden bzw. bewirkt werden.

Fig. 2 zeigt die entsprechende Anordnung beim Schweißen zweier Rohre 18 und 19, die im Abstand d einander gegenüber angeordnet sind. Das

hier anzuwendende Schweißverfahren als solches ist :

in der DT-PS 23 21 070 beschrieben. Gemäß der Erfindung kommt hier nun hinzu, daß das eine 19, der beiden Rohre gemäß Pfeilrichtung während der Schweißung bewegt wird, so daß die vorgegebenen Sollwerte der gewählten Schweißparameter (z. B. I, U oder $\int_0^t I.R^{y}\,dt$ von 0 bis t) eingehalten werden.

# Patentansprüche

1. Verfahren zum Schweißen zweier metallischer Werkstücke, mit längs einer Schweißkanten-Nahtbahn magnetisch bewegtem Lichtbogen,

   dadurch gekennzeichnet,

   daß der Istwert von Schweißstrom I oder/und -Spannung U oder einer aus diesen gebildeten Größe mit einem Sollwert verglichen und durch Ändern des vom Lichtbogen übersprungenen Abstands zwischen den Werkstücken während des Schweißvorganges auf den Sollwert nachgeregelt wird.

2. Verfahren nach Anspruch 1,

   dadurch gekennzeichnet,

   daß als Istwert die Größe $\int_0^t I.R\ dt$ oder $I.R^y . t$ gebildet wird, wobei der Exponent y einen von 1 verschiedenen solchen Wert hat, daß der Einfluß des Widerstands R auf den angezeigten Istwert mindestens gleichwertig zum Einfluß des Stromes oder/und der Schweißzeit t auf den angezeigten Istwert wird.

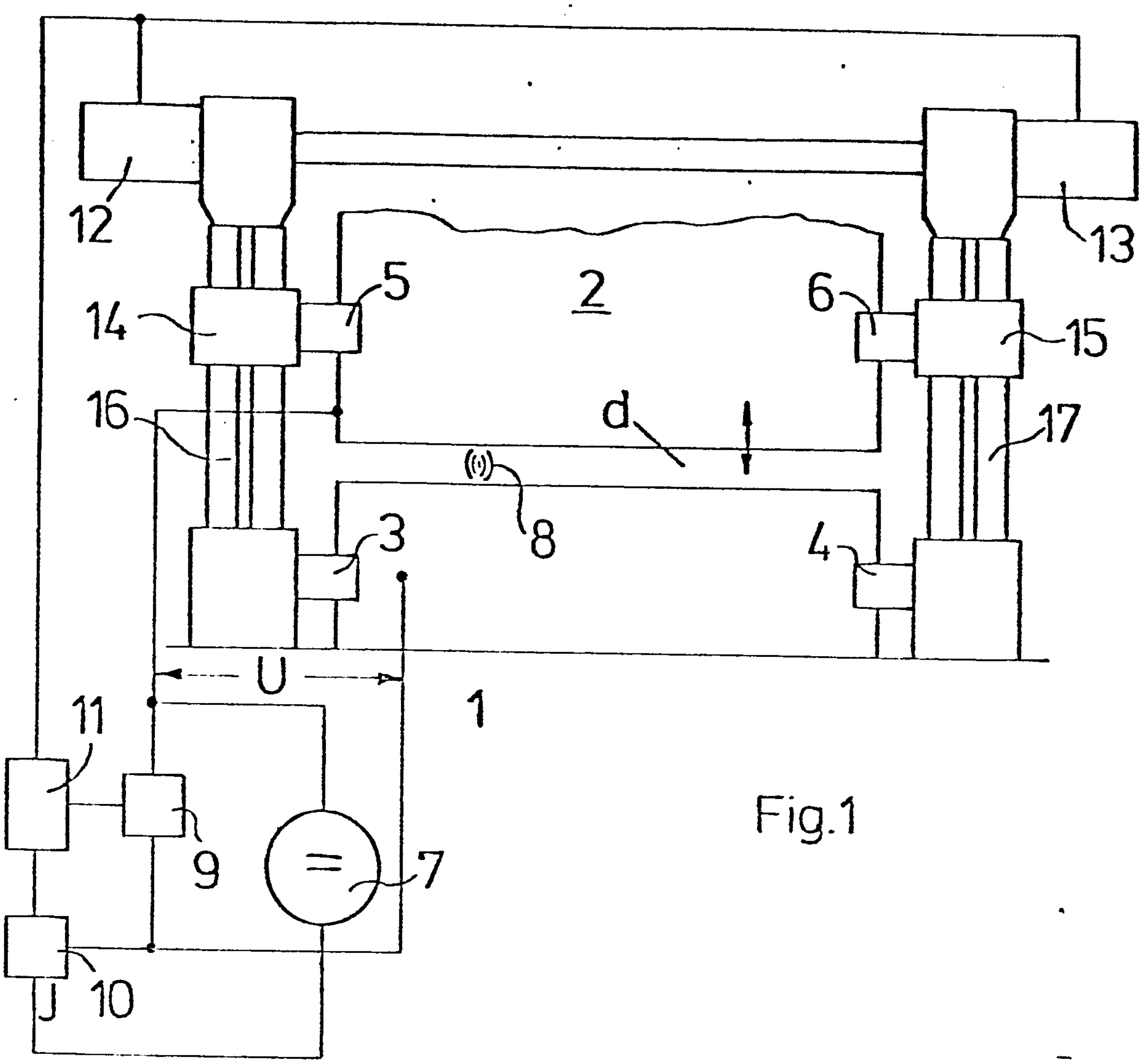


Fig.1

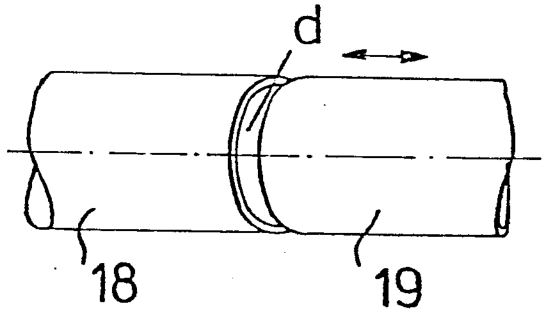


Fig. 2

0003830

Europäisches Patentamt

# EUROPÄISCHER RECHERCHENBERICHT

Nummer der Anmeldung

EP 79 10 0507

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - A - 1 565 041 (SCIAKY)<br>* Seite 15 *<br>& FR - A - 1 390 475<br>US - A - 3 484 578<br>-- | 1 | B 23 K 9/08 |
| | US - A - 3 233 076 (WELDING RESEARCH)<br>* Spalte 2, Zeilen 6-44 *<br>& GB - A - 1 088 511<br>-- | 2 | RECHERCHIERTE SACHGEBIETE (Int. Cl.²) |
| | US - A - 3 443 057 (UNION CARBIDE)<br>* Spalte 1, Zeilen 12-20 *<br>-- | 1 | B 23 K 9/08<br>9/06 |
| | FR - A - 1 543 980 (AIR REDUCTION)<br>* Seite 5 *<br>& GB - A - 1 186 735<br>BE - A - 700 576<br>DE - A - 1 615 100<br>---- | 2 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 07-05-1979 | HOORNAERT |